**Europäisches Patentamt**

**European Patent Office**

**Office européen des brevets**

(19)

(11) **EP 1 449 689 A1**

(12) **DEMANDE DE BREVET EUROPEEN**

(43) Date de publication:
**25.08.2004 Bulletin 2004/35**

(51) Int Cl.⁷: $B60H\ 1/00$, B60H 1/32

(21) Numéro de dépôt: **04290445.8**

(22) Date de dépôt: **19.02.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **21.02.2003 FR 0302179**

(71) Demandeur: **Renault s.a.s.**
**92100 Boulogne Billancourt (FR)**

(72) Inventeurs:
• **Allouchery, Laurent**
**78960 Voisins le Bretonneux (FR)**
• **Chauvelier, Eric**
**78320 Le Mesnil Saint Denis (FR)**

(54) **Procédé et système de contrôle de la température de l'habitacle d'un véhicule automobile**

(57)     Pour contrôler la température de l'habitacle d'un véhicule automobile, on pilote des moyens 12, 14 de refroidissement et/ou de chauffage de l'habitacle de manière à asservir la température de l'habitacle 16 sur une température de consigne. En outre, on met en oeuvre des étapes consistant à réaliser des cycles de charges et de décharge d'une batterie de stockage d'énergie électrique 26 en fonction de la consommation des moyens 12, 14 de refroidissement et/ou de chauffage, du point de fonctionnement du moteur du véhicule et de l'état de charge de la batterie 26.

## FIG.1

EP 1 449 689 A1

**Description**

L'invention concerne le domaine des systèmes de climatisation ou des pompes à chaleur pour véhicules automobiles.

Plus particulièrement, l'invention concerne un procédé et un système de contrôle de la température de l'habitacle d'un véhicule automobile.

Un des soucis constants des constructeurs de véhicules automobiles est la limitation de la consommation en carburant des moteurs.

Ce problème se pose de manière accrue pour des véhicules dotés de dispositifs de climatisation électromécaniques, pour lesquels le fonctionnement du compresseur du dispositif de climatisation entraîne une augmentation sensible de la consommation.

En outre, les dispositifs de climatisation conventionnels ne peuvent pas être mis en fonctionnement lorsque le moteur du véhicule est à l'arrêt.

Différents types de dispositifs de climatisation ont été mis au point afin de pallier ces inconvénients.

C'est ainsi qu'il a été proposé de stocker les frigories produites par le dispositif de climatisation lors de phases de freinage et d'utiliser ces frigories lors de phases au cours desquelles le rendement de fonctionnement du moteur est mauvais ou lors de sollicitations accrues.

Il a été également proposé de contrôler la demande de puissance provenant du dispositif de climatisation afin de limiter la dégradation des performances du générateur leur fournissant la puissance demandée. On limite ainsi la surconsommation en carburant du moteur thermique due à la demande de puissance de la climatisation.

Bien que permettant d'améliorer de manière sensible le fonctionnement des dispositifs de climatisation, ces techniques ne permettent pas de faire fonctionner le générateur de puissance électrique alimentant le dispositif de climatisation à son meilleur point de fonctionnement lorsque la climatisation requiert de sa part de la puissance électrique. En effet, lorsque le générateur de puissance électrique est sollicité, il doit fournir de la puissance de traction, ce qui est une fonction prioritaire, mais également alimenter d'autres dispositifs auxiliaires.

Au vu de ce qui précède, le but de l'invention est de fournir un procédé et un dispositif de contrôle de la température de l'habitacle d'un véhicule automobile permettant de pallier les inconvénients des dispositif de l'état de la technique.

Selon l'invention, il est donc proposé un procédé de contrôle de la température de l'habitacle d'un véhicule automobile, par pilotage de moyens de refroidissement et/ou de chauffage de l'habitacle de manière à asservir la température de l' habitacle sur une température de consigne.

Ce procédé comporte les étapes consistant à mettre en oeuvre des cycles de charges et de décharges d'une batterie de stockage d'énergie électrique en fonction de la consommation des moyens de refroidissement et/ou de chauffage, du point de fonctionnement du moteur du véhicule et de l'état de charge de la batterie.

Il est ainsi possible d'optimiser la consommation de carburant dans la mesure où les phases de freinage récupératif lors desquelles on stocke l'énergie électrique fournie, ne constituent pas une phase de fonctionnement particulière, mais fait partie intégrante d'un processus de gestion de la température de l'habitacle du véhicule, en sachant que la demande d'énergie des dispositifs auxiliaires du véhicule, le point de fonctionnement du moteur et l'état de charge de la batterie sont à prendre en compte dans la gestion de la température de l'habitacle. On peut également décorréler le fonctionnement du dispositif de climatisation de celui du moteur thermique du véhicule.

Dans un mode de mise en oeuvre, le procédé comporte les étapes consistant à :

- extraire d'une première cartographie, dans laquelle sont stockées un ensemble de valeurs d'une variable *K* d'une fonction liant la consommation de carburant du moteur du véhicule et la charge d'une batterie d'alimentation, une valeur correspondant à l'état de charge de la batterie du véhicule ; et
- piloter un générateur d'énergie électrique de manière à minimiser la consommation en carburant du véhicule.

Avantageusement, on extrait d'une deuxième cartographie liant des niveaux de puissance correspondant chacun à une puissance optimale à délivrer par le générateur pour maintenir le niveau de charge de la batterie à l'intérieur d'une plage admissible avec un niveau de consommation minimum et des niveaux de puissance correspondant à des niveaux de puissance demandée pour ledit générateur, un niveau de puissance optimum correspondant à la valeur du paramètre K extraite de la première cartographie, et l'on pilote le générateur en fonction du niveau de puissance extrait de la deuxième cartographie.

Dans un mode de mise en oeuvre avantageux, le procédé selon l'invention comporte en outre des étapes consistant à mettre en oeuvre des cycles de charge et de décharge de moyens de stockage de frigories et/ou de calories et de maintien du niveau de charge desdits moyens de stockage à un niveau suffisant pour permettre un refroidissement de l'habitacle.

De préférence, au cours des étapes de charge et de décharge des moyens de stockage de frigories et/ou de calories :

- on extrait, d'une troisième cartographie dans laquelle sont stockées un ensemble de valeurs d'une variable *K'* d'une fonction liant la consommation des moyens de refroidissement et/ou de chauffage de l'habitacle et la consommation des moyens de stockage de calories et/ou des frigories, une valeur correspondant à l'état de charge desdits moyens de stockage ;

- on extrait, de cartographies, des valeurs de commande des moyens de refroidissement et/ou de chauffage de l'habitacle aptes à minimiser la consommation desdits moyens de refroidissement et/ou de chauffage, à partir de la valeur de ladite variable K' ; et

on pilote les moyens de refroidissement et/ou de chauffage au moyen desdites valeurs de commande.

Selon une autre caractéristique de l'invention, les première et troisième cartographies sont calculées au moyen d'une méthode variationnelle.

Selon l'invention, il est également proposé un système de contrôle de la température de l'habitacle d'un véhicule automobile, comprenant des moyens de refroidissement et/ou de chauffage de l'habitacle alimentés par un générateur d'énergie électrique et un calculateur comprenant des moyens pour asservir la température de l'habitacle sur une température de consigne.

Ce système comporte une batterie de stockage d'énergie électrique destinée à être chargée et déchargée en fonction de la consommation des moyens de refroidissement et/ou de chauffage, du point de fonctionnement du moteur du véhicule et de l'état de charge de la batterie.

Avantageusement, le calculateur comporte, stockées en mémoire, une première cartographie, dans laquelle sont stockées un ensemble de valeurs d'une variable K d'une fonction liant la consommation de carburant du moteur du véhicule et la charge d'une batterie d'alimentation, et une deuxième cartographie liant des niveaux de puissance correspondant chacun à une puissance optimale à délivrer par le générateur pour maintenir le niveau de charge de la batterie à l'intérieur d'une plage admissible avec un niveau de consommation minimum et des niveaux de puissance correspondant à des niveaux de puissance demandée pour ledit générateur, un niveau de puissance optimum correspondant à la valeur du paramètre K extraite de la première cartographie, le générateur étant destiné à être piloté en fonction du niveau de puissance extrait de la deuxième cartographie.

Dans un mode de réalisation, le calculateur comporte, stockées en mémoire, une troisième cartographie dans laquelle sont stockées un ensemble de valeurs d'une variable K' d'une fonction liant la consommation des moyens de refroidissement et/ou de chauffage de l'habitacle et la consommation des moyens de stockage de calories et/ou des frigories, et un ensemble de cartographies dans lesquelles sont stockées des valeurs de commande des moyens de refroidissement et/ou de chauffage de l'habitacle aptes à minimiser la consommation desdits moyens de refroidissement et/ou de chauffage, à partir de la valeur de ladite variable K', les moyens de refroidissement et/ou de chauffage étant pilotés au moyen desdites valeurs de commande.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1 est un schéma synoptique illustrant la structure générale d'un système de contrôle de température d'un habitacle de véhicule automobile conforme à l'invention ;
- la figure 2 est une courbe illustrant le calcul de la variable K de la fonction liant la consommation de carburant du moteur et la charge de la batterie d'alimentation ;
- la figure 3 illustre l'élaboration de la variable K' de la fonction liant la consommation des moyens de refroidissement et/ou de chauffage et la consommation des moyens de stockage de calories et/ou des frigories ;
- la figure 4 montre des courbes illustrant la variation de la puissance mécanique optimale fournie par le moteur en fonction de la puissance mécanique demandée pour différentes valeurs de variable K, permettant d'élaborer le signal de commande du générateur électrique ; et
- la figure 5 est un organigramme illustrant les principales phases du procédé de contrôle de température conforme à l'invention.

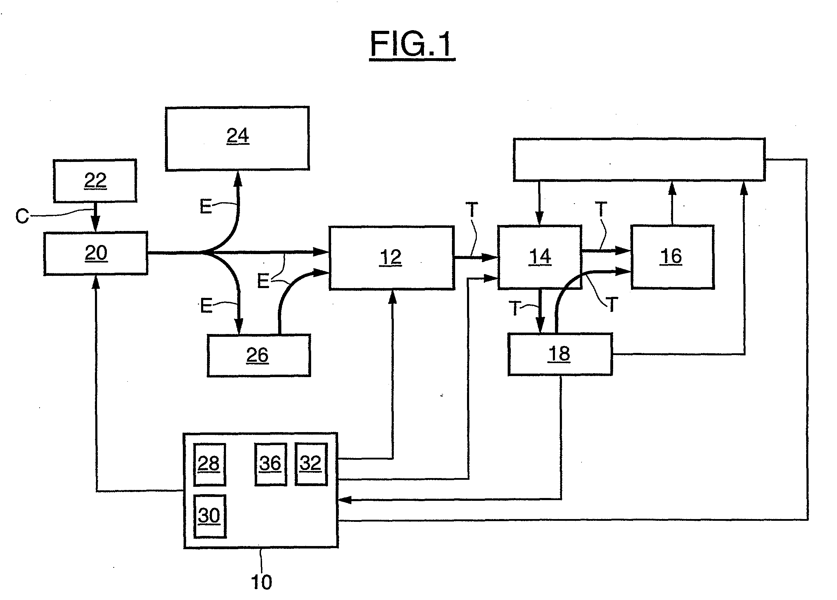

Sur la figure 1, on a représenté la structure générale d'un système de contrôle de température de l'habitacle d'un véhicule automobile. Sur cette figure, des flux de carburant sont représentés par une flèche C, des flux électriques sont représentés par des flèches E et des flux thermiques sont représentés par des flèches T.

Comme cela est classique, ce système comporte un calculateur central 10, embarqué à bord du véhicule automobile, et des moyens de commande aptes à agir sur des moyens de chauffage et/ou de refroidissement de l'habitacle du véhicule de manière à modifier sa température, à savoir, d'une part, un compresseur et un évaporateur 12 et, d'autre part, des volets et pulseurs 14 permettant de contrôler le flux d'air issu du compresseur et de l'évaporateur 12 et délivré à l'habitacle 16.

Par ailleurs, des moyens de stockage de frigories 18, de type classique, sont disposés en relation d'échange thermique avec les volets et pulseurs 14, de manière à stocker des frigories provenant de l'évaporateur, ou des calories provenant du condenseur lorsqu'elles peuvent être produites sans influer sur la consommation du véhicule.

Pour l'alimentation des moyens de refroidissement et/ou de chauffage de l'habitacle, le système est pourvu d'un générateur d'énergie électrique, constitué par le moteur à combustion interne du véhicule associé à un alternateur pour convertir la puissance mécanique délivrée par le moteur en énergie électrique correspondante. Comme cela est connu en soi, le générateur 20 est alimenté en carburant à partir d'un réservoir 22. Par moteur, on peut entendre aussi une pile à combustible produisant de l'énergie électrique.

La puissance électrique ainsi fournie est délivrée, d'une part, au compresseur et à l'évaporateur 12 et, d'autre part, à des dispositifs auxiliaires, tels que 24, y compris des moyens moteur du véhicule servant à sa propulsion.

Une batterie de stockage d'énergie 26 est utilisée pour le stockage de l'énergie électrique issue du générateur 20, et pour restituer cette énergie électrique au compresseur et à l'évaporateur 12, et ce, en fonction de la consommation des moyens de refroidissement et/ ou de chauffage, du point de fonctionnement du moteur du véhicule et de l'état de charge de la batterie.

En fonction de l'état de charge de la batterie 26 et de la consommation spécifique du générateur 22, c'est-à-dire du rendement au point de fonctionnement du moteur, le calculateur 10 pilote le générateur à son meilleur point de fonctionnement de manière à fournir la puissance nécessaire à la traction du véhicule.

En particulier, en fonction de la puissance consommée par le compresseur et de la puissance fournie par le générateur, la batterie 26 se charge pour absorber l'excédent de puissance ou se décharge pour fournir assez de puissance au compresseur pour atteindre une consigne de température demandée par le conducteur du véhicule.

A cet effet, le calculateur comporte ou est associé à une première cartographie 28 dans laquelle sont stockées un ensemble de valeurs d'une variable K d'une fonction S liant la consommation de carburant du moteur du véhicule et la charge de la batterie 26.

Par exemple, la fonction S liant la consommation de carburant et la consommation d'énergie électrique par les moyens de climatisation et/ou de refroidissement est donnée par la relation suivante :

$$S = conso\_carb - K.conso\_élec \qquad (1)$$

Une deuxième cartographie 30 regroupe l'ensemble des niveaux de puissance correspondant chacun à une puissance optimale à délivrer par le générateur pour maintenir un niveau de charge de la batterie à l'intérieur d'une plage admissible, en fonction de la puissance mécanique demandée par le conducteur du véhicule, pour différentes valeurs de la variable K précitée.

Par ailleurs, pour piloter les volets et pulseurs 14 de manière à stocker des frigories (respectivement des calories) à l'intérieur des moyens de stockage 18, le calculateur 10 incorpore une troisième cartographie 32 dans laquelle sont stockées un ensemble de valeurs d'une variable K' d'une fonction liant la consommation des moyens de refroidissement et/ou de chauffage de l'habitacle et la consommation des moyens de stockage de calories et/ou de frigories.

Des cartographies additionnelles, dans lesquelles sont stockées des valeurs de commande des moyens de refroidissement et/ou de chauffage de l'habitacle, sont aptes à minimiser la consommation de ces moyens de refroidissement et/ou de chauffage.

On notera que la fonction liant la consommation des moyens de refroidissement et/ou de chauffage de l'habitacle et la consommation des moyens de stockage de calories et/ou de frigories, est une fonction identique à la fonction (1) précitée.

Les cartographies 28 et 32 donnant les variables K et K', sont calculées à partir de la méthode dite « variationnelle ».

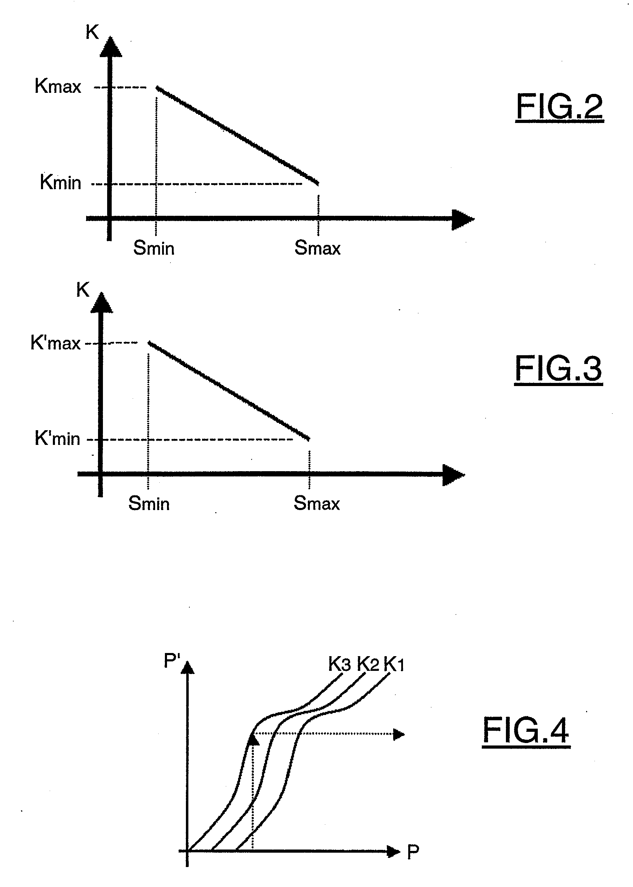

En particulier, en se référant aux figures 2 et 3, par exemple on voit que les variable K sont définies par une variable décroissant linéairement en fonction de l'état de charge de la batterie ou des moyens de stockage 18.

En d'autres termes, par exemple, plus l'état de charge de la batterie est faible, plus la valeur de la variable K correspondante est élevée.

En se référant à la figure 4, pour une puissance mécanique P demandée, la puissance mécanique optimale P' augmente lorsque K augmente. Sur cette figure 4, les courbes K1, K2 et K3 correspondent à des valeurs de puissance mécanique optimales P' pour des valeurs de K croissantes.

A partir de la valeur de la puissance mécanique optimale P' ainsi obtenue, le calculateur 10 élabore des signaux de commande Cde en fonction des stratégies de commutation choisies.

Comme on le conçoit, au moyen d'une telle stratégie de pilotage, la batterie 26 ne se retrouvera jamais au seuil minimum de charge Smin car la régulation est assurée par le paramètre K qui augmente lorsque l'état de charge de la batterie diminue et force ainsi le générateur à produire plus de puissance et donc à recharger la batterie.

On notera que le fonctionnement qui vient d'être décrit est identique pour la boucle frigorifique ou pour la pompe à chaleur. Le stock de frigories (ou de calories) est géré par la variable K' et le compresseur est piloté par une commande déterminée à partir de la valeur de K' et de la configuration optimale du système.

Enfin, une cartographie additionnelle 36 est utilisée pour gérer la température de l'habitacle à partir de l'écart entre la température souhaitée et la température effective. Cette cartographie permet de piloter les volets et les pulseurs en fonction des frigories disponibles, c'est-à-dire stockées dans les moyens de stockage 18 ou produites par le compresseur 12. D'autres moyens classiques de commande peuvent être utilisés pour la gestion de la température de l'habitacle.

Comme précédemment, lorsque l'état de charge des moyens de stockage de frigories ou calories baisse, la consigne du compresseur est augmentée pour restituer la réserve de frigories.

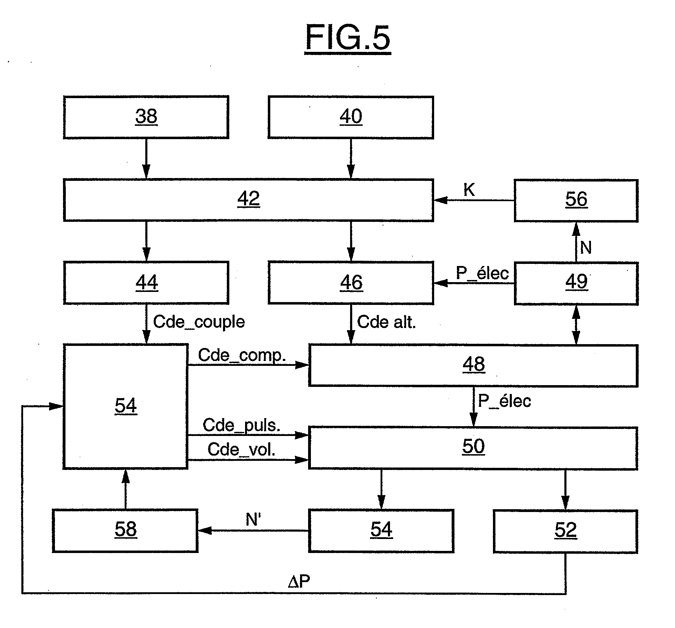

Le procédé de contrôle de la température de l'habitacle d'un véhicule à moteur thermique pourvu d'un dispositif de climatisation va maintenant être décrit en référence à la figure 5.

Sur cette figure, les phases de contrôle moteur essentielles ont également été reprises par souci de clarté.

Comme on le voit sur cette figure, lorsque le conducteur du véhicule automobile demande un couple prédéterminé (étape 38) ou lorsqu'un auxiliaire électrique demande une puissance prédéterminée (étape 40), le calculateur 10 du véhicule interroge deux cartographies respectives pour élaborer des signaux de commande Cde_couple et des signaux de commande d'alternateur Cde_alt (étape 42), lesquels sont fournis au moteur thermique (étape 44) et à l'alternateur (étape 46).

En ce qui concerne le fonctionnement de l'alternateur, celui-ci délivre une puissance électrique $P_{elec}$ aux moyens de refroidissement et/ou de chauffage du véhicule (étape 48). En outre, les pulseurs et volets 14 sont pilotés, lors de l'étape 50 suivante, par le calculateur 10, de manière à commander un transfert de frigories vers l'habitacle du véhicule (étape 52) ou vers les moyens de stockage thermiques (étape 54).

En particulier, le niveau de température de l'habitacle est comparé avec le niveau de température souhaité par le conducteur et le résultat de cette comparaison ΔP est utilisé pour piloter le compresseur, l'évaporateur, ainsi que les pulseurs et les volets.

Pour procéder au stockage de l'énergie électrique disponible, lors de l'étape 49 suivante, de la puissance électrique $P_{elec}$ est également fournie par l'alternateur 46 à la batterie 26. Le niveau N de charge de la batterie est surveillé et utilisé pour déterminer la valeur de la variable K laquelle est, comme indiqué précédemment, utilisée pour l'élaboration des commandes Cde_alt et Cde_couple servant au pilotage du moteur thermique de l'alternateur (étape 56).

De même, le niveau N' de stockage thermique dans les moyens de stockage de frigories 18 est mesuré et est utilisé pour le calcul de la variable K' (étape 58) ainsi que pour l'élaboration des commandes Cde_comp, Cde_puls et Cde_vol à l'aide cartographies respectives (étape 60).

Dans l'exemple de réalisation décrit, le compresseur est un compresseur électrique. Selon l'invention, le compresseur peut être un compresseur mécanique dont l'énergie mécanique nécessaire à la production de frigories ou de calories prélève de l'énergie au moteur au même titre que l'alternateur. Dans le cas d'un compresseur mécanique, à iso consommation de carburant, la demande d'énergie du compresseur influence aussi la quantité d'énergie électrique disponible pour les dispositifs électriques auxiliaires. Pour adapter le procédé ou le système selon l'invention, les calculs sont identiques, mais les valeurs de variable K sont spécifiques au type de compresseur utilisé et à la répartition d'énergie prélevée au moteur qui en découle.

## Revendications

1. Procédé de contrôle de la température de l'habitacle d'un véhicule automobile, par pilotage de moyens (12, 14) de refroidissement et/ou de chauffage de l'habitacle de manière à asservir la température de l'habitacle sur une température de consigne, **caractérisé en ce qu'**il comporte les étapes consistant à mettre en oeuvre des cycles de charge et de décharge d'une batterie de stockage d'énergie électrique (26) en fonction de la consommation des moyens (12, 14) de refroidissement et/ou de chauffage, du point de fonctionnement du moteur du véhicule et de l'état de charge de la batterie.

2. Procédé selon la revendication 1, **caractérisé en ce qu'**il comporte les étapes consistant à :

   - extraire d'une première cartographie (28), dans laquelle sont stockées un ensemble de valeurs d'une variable *K* d'une fonction liant la consommation de carburant du moteur du véhicule et la charge d'une batterie d'alimentation, une valeur correspondant à l'état de charge de la batterie du véhicule ; et
   - piloter un générateur d'énergie électrique (20) de manière à minimiser la consommation en carburant du véhicule.

3. Procédé selon la revendication 2, **caractérisé en ce que** l'on extrait d'une deuxième cartographie (30) liant des niveaux de puissance correspondant chacun à une puissance optimale à délivrer par le générateur pour maintenir le niveau de charge de la batterie à l'intérieur d'une plage admissible avec un niveau de consommation minimum et des niveaux de puissance correspondant à des niveaux de puissance demandée pour ledit générateur, un niveau de puissance optimum correspondant à la valeur du paramètre K extraite de la première cartographie, et l'on pilote le générateur (20) en fonction du niveau de puissance extrait de la deuxième cartographie.

4. Procédé selon l'une quelconque des revendications 1 à 3, **caractérisé en ce qu'**il comporte en outre des étapes consistant à mettre en oeuvre des cycles de charge et de décharge de moyens de stockage de frigories et/ou de calories (18) et de maintien du niveau de charge desdits moyens de stockage (18) à un niveau suffisant pour permettre un refroidissement de l'habitacle.

**5.** Procédé selon la revendication 4, **caractérisé en ce qu'**au cours des étapes de charge et de décharge des moyens de stockage de frigories et/ou de calories :

- on extrait, d'une troisième cartographie (32) dans laquelle sont stockées un ensemble de valeurs d'une variable K' d'une fonction liant la consommation des moyens de refroidissement et/ou de chauffage de l'habitacle et la consommation des moyens de stockage de calories et/ou des frigories, une valeur correspondant à l'état de charge desdits moyens de stockage ;
- on extrait, de cartographies, des valeurs de commande des moyens de refroidissement et/ou de chauffage de l'habitacle aptes à minimiser la consommation desdits moyens de refroidissement et/ou de chauffage, à partir de la valeur de ladite variable K' ; et
- on pilote les moyens (12, 14) de refroidissement et/ou de chauffage au moyen desdites valeurs de commande.

**6.** Procédé les revendications 3 et 5, **caractérisé en ce que** les première et troisième cartographies (28, 32) sont calculées au moyen d'une méthode variationnelle.

**7.** Système de contrôle de la température de l'habitacle (16) d'un véhicule automobile, comprenant des moyens (12, 14) de refroidissement et/ou de chauffage de l'habitacle alimentés par un générateur d'énergie électrique (20) et un calculateur (10) comprenant des moyens pour asservir la température de l'habitacle sur une température de consigne, **caractérisé en ce qu'**il comporte une batterie de stockage d'énergie électrique (26) destinée à être chargée et déchargée en fonction de la consommation des moyens de refroidissement et/ou de chauffage, du point de fonctionnement du moteur du véhicule et de l'état de charge de la batterie.

**8.** Système selon la revendication 7, **caractérisé en ce que** le calculateur comporte, stockées en mémoire, une première cartographie (28), dans laquelle sont stockées un ensemble de valeurs d'une variable *K* d'une fonction liant la consommation de carburant du moteur du véhicule et la charge d'une batterie d'alimentation, et une deuxième cartographie (30) liant des niveaux de puissance correspondant chacun à une puissance optimale à délivrer par le générateur pour maintenir le niveau de charge de la batterie à l'intérieur d'une plage admissible avec un niveau de consommation minimum et des niveaux de puissance correspondant à des niveaux de puissance demandée pour ledit générateur, un niveau de puissance optimum correspondant à la valeur du paramètre K extraite de la première cartographie, le générateur (20) étant destiné à être piloté en fonction du niveau de puissance -extrait de la deuxième cartographie (30).

**9.** Système selon la revendication 8, **caractérisé en ce que** le calculateur comporte, stockées en mémoire, une troisième cartographie (32) dans laquelle sont stockées un ensemble de valeurs d'une variable K' d'une fonction liant la consommation des moyens de refroidissement et/ou de chauffage de l'habitacle et la consommation des moyens de stockage de calories et/ou des frigories, et un ensemble de cartographies dans lesquelles sont stockées des valeurs de commande des moyens de refroidissement et/ou de chauffage de l'habitacle aptes à minimiser la consommation desdits moyens de refroidissement et/ou de chauffage, à partir de la valeur de ladite variable *K'*, les moyens de refroidissement et/ou de chauffage étant pilotés au moyen desdites valeurs de commande.

FIG.1

FIG.2

FIG.3

FIG.4

## FIG.5

**Office européen**    **RAPPORT DE RECHERCHE EUROPEENNE**    Numéro de la demande

**des brevets**      EP 04 29 0445

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | FR 2 811 617 A (SANDEN CORP) 18 janvier 2002 (2002-01-18) * page 10, ligne 15 – page 13, ligne 36; figures 1,6-8 * | 1-5,7-9 | B60H1/00 B60H1/32 |
| A | EP 1 038 703 A (CARRIER CORP) 27 septembre 2000 (2000-09-27) * colonne 3, ligne 7 – colonne 5, ligne 28; figures 1-3 * | 1-5,7-9 | |
| A | GB 2 322 935 A (ROVER GROUP) 9 septembre 1998 (1998-09-09) * page 2, ligne 12 – page 4, ligne 15 * * page 5, ligne 15 – page 6, ligne 30; figures 1,2 * | 1,2,7,8 | |
| A | US 6 515 448 B2 (HONDA KEITA ET AL) 4 février 2003 (2003-02-04) * colonne 7, ligne 1 – colonne 11, ligne 59; figures 1-7 * | 1,7 | |

**DOMAINES TECHNIQUES RECHERCHES (Int.Cl.7)**

B60H

Le présent rapport a été établi pour toutes les revendications

| Lieu de la recherche | Date d'achèvement de la recherche | Examinateur |
|---|---|---|
| La Haye | 27 mai 2004 | Chlosta, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

  & : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 04 29 0445

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-05-2004

| Document brevet cité au rapport de recherche | | Date de publication | Membre(s) de la famille de brevet(s) | | Date de publication |
|---|---|---|---|---|---|
| FR 2811617 | A | 18-01-2002 | JP | 2002029253 A | 29-01-2002 |
| | | | DE | 10130181 A1 | 07-02-2002 |
| | | | FR | 2811617 A1 | 18-01-2002 |
| EP 1038703 | A | 27-09-2000 | US | 6226998 B1 | 08-05-2001 |
| | | | EP | 1038703 A2 | 27-09-2000 |
| GB 2322935 | A | 09-09-1998 | GB | 2322936 A ,B | 09-09-1998 |
| | | | GB | 2293003 A ,B | 13-03-1996 |
| | | | US | 5588481 A | 31-12-1996 |
| US 6515448 | B2 | 04-07-2002 | JP | 2002262401 A | 13-09-2002 |
| | | | DE | 10164190 A1 | 04-07-2002 |
| | | | US | 2002084769 A1 | 04-07-2002 |

EPO FORM P0460

Pour tout renseignement concernant cette annexe : voir Journal Officiel de l'Office européen des brevets, No. 12/82